# EUROPEAN PATENT APPLICATION

(11) **EP 2 348 235 A1**
(43) Date of publication of application: **27.07.2011**
(21) Application number: 10151192.1
(22) Date of filing: 20.01.2010
(51) Int. Cl.: F16J 15/02, F16J 15/06, B01D 46/00

(54) **Sealing arrangement**

(71) Applicant: Alstom Technology Ltd, 5400 Baden (CH)
(72) Inventor: Hjelmberg, Anders Erik Martin, 352 44, Växjö (SE); Peco, Faruk, 295 39, Kalmar (SE)
(74) Representative: Hjalmarsson, Magnus Axel

(57) **Abstract**

The present disclosure relates to a sealing arrangement for a cover (11), covering an opening (9). The sealing arrangement has at least one deformable sealing strip (27) disposed between said cover and cover overlapping areas (15), which surround said opening. A compression limiting device is attached to the cover overlapping areas or the cover, and limits the compression of the deformable sealing strip such that the sealing strip is compressed but carries only a portion of the cover load when the opening is closed by the cover. This provides uniform compression along the length of the sealing strip.

## Description

### Technical field

The present invention relates to a sealing arrangement for a cover suitable for covering an opening. More particularly, the sealing arrangement comprises at least one deformable sealing strip disposed between said cover and cover overlapping areas, which surround said opening and which abut the cover via the sealing strip when the opening is covered.

### Background

Such sealing arrangements are used e.g. to cover maintenance openings, providing access to textile filter plenary spaces. Often, it is important that the sealing arrangement is very tight. This is due to the fact that textile filters often operate at pressures lower than atmospheric pressure, and that air, leaking into the filter, may lower the operational temperature and cause undesirable effects, such as condensation.

### Summary

An object of the present disclosure is to provide a sealing arrangement, suitable for use in sealing a fabric filter cover, with improved sealing capability. This object is achieved by means of the sealing arrangement described herein and defined in the claims below.

Sealing arrangements of the present invention comprise a compression limiting device attached to areas surrounding an opening that overlap a cover when the cover is positioned over the opening. The compression limiting device limits the compression of a deformable sealing strip attached between the cover overlapping areas and the cover such that the sealing strip is compressed to a degree but carries only a portion of the cover weight/load when the opening is covered by the cover. Accordingly, the sealing strip is substantially uniformly compressed along its entire length providing for improved sealing capabilities with regard to providing a relatively long-lasting gastight seal.

The sealing strip may be devised as a hollow tube or like a profile that may be filled with a foam material.

The compression limiting device may include a flange extending from the cover overlapping area and defining a first edge, having a flange height that is smaller than the height of the sealing strip in its uncompressed state.

Additionally, a second flange may be provided extending from the cover overlapping area and defining a second edge, having a flange height that is smaller than the flange height of the first flange, wherein a channel is formed between the first and second flanges, and wherein the sealing strip, in its compressed state, substantially fills the distance/channel between first and second flanges.

The compression limiting device may further be optimised for sealing rather than load carrying purposes.

The opening may provide an entry into a plenary space of a textile filter unit, which plenary space has a pressure below atmospheric pressure when the textile filter unit is operating.

The cover may further be provided with stiffness improving means running in more than one direction over, under and/or through the cover, such that the flexural rigidity of the cover is substantially the same, regardless of the axis across which the cover is flexed.

The sealing strip may be attached to the cover overlapping areas and may comprise an arc-shaped top portion for contact with the cover.

### Brief description of the drawings

Fig 1 and 2 illustrate, schematically, a textile or fabric filter unit.
Fig 3 shows a prior art cover sealing arrangement.
Fig 4 illustrates a prior art cover.
Fig 5 and 6 illustrate a cross section through a sealing arrangement in accordance with the present disclosure in an opened and in a closed position, respectively.
Fig 7 illustrates an improved cover.

### Detailed description

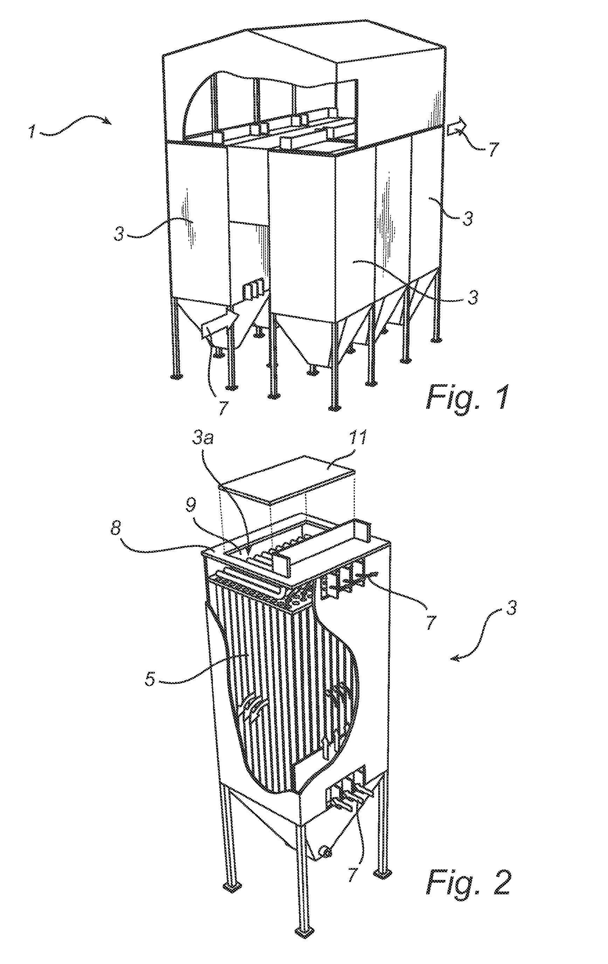

Fig 1 and 2 illustrate, schematically, a fabric filter unit 1 where the cover sealing arrangement of the present disclosure is useful. The fabric filter unit may be used to remove particles from a flue gas, which may be generated from a combustion process such as for example burning coal, oil, waste, and/or the like. The shown fabric filter unit 1 includes six filter sections 3, one of which is illustrated in greater detail in fig 2. Each filter section 3 has a plurality of hose-shaped textile/fabric filter elements 5 which present a considerable filter area to a flue gas 7 that is passed through fabric filter unit 1.

In order to allow maintenance of filter section 3 and replacement of filter elements 5, an opening 9 is provided in a top wall 8 of filter section 3. During operation of fabric filter unit 1, opening 9 is completely covered by a cover 11. A sealing arrangement in accordance with the present disclosure as disclosed in more detail below provides a substantially gastight seal between the cover 11 and top wall 8.

Usually, the interior 3a of filter section 3 is below atmospheric pressure. Leakage of cold ambient air into filter section 3 is undesirable as such lowers the flue gas temperature and makes the flue gases condensate to a greater extent. Upon condensation, chemically aggressive components of the flue gases may cause excessive corrosion in filter section 3. This excessive corrosion problem is particularly severe in waste incineration processes, which may be difficult control and may include a significant amount of hydrochloric acid. Hence, there exists a need for reliable gastight sealing arrangements for top cover 11. It should be noted that the top cover 11 in many cases may be relatively large, typically 3x4 metres.

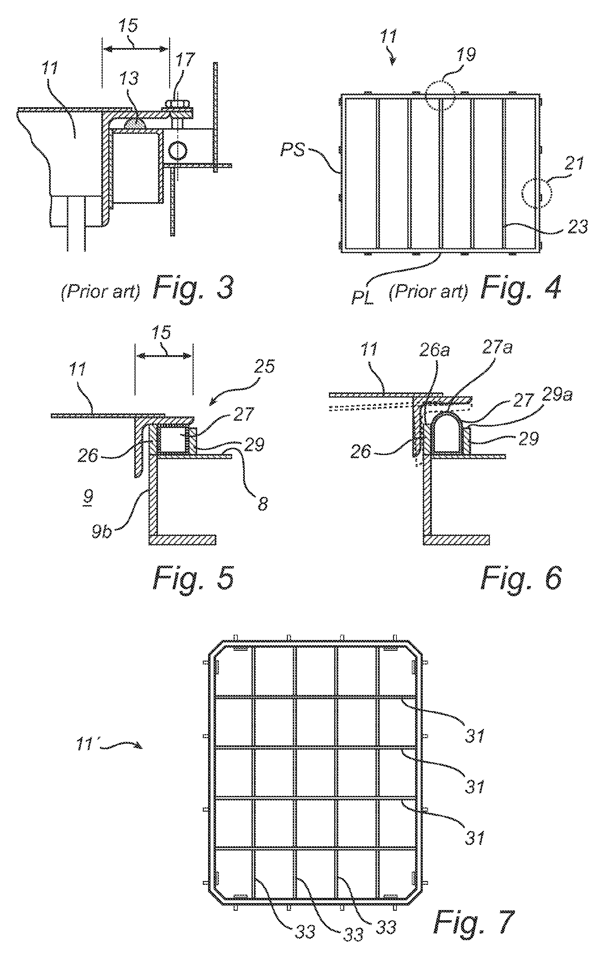

Fig 3 illustrates a prior art cover sealing arrangement. In this arrangement a sealing strip 13, which is disposed between the cover 11 and cover overlapping areas 15 around the opening 9, abuts the cover 11.

The sealing strip 13 is made of an elastic material and has, in the illustrated case, a cross section in the form of a half circle. The sealing strip 13 is compressed by the total load of the cover which includes the weight of the cover 11 in addition to the load resulting from the under-pressure in the sealed space. Even though a filter unit of the kind illustrated in fig 1 and 2 is usually operated under ambient pressure, a locking device 17 is provided on top wall 8 to ensure the cover 11 is not lifted up by an over-pressure in interior 3a, which may nevertheless occur temporarily.

In the prior art configuration, it has been found that a substantial residual gas leakage may still occur even though the sealing strip 13 is provided. Fig 4 shows a prior art cover 11 and illustrates one reason why the substantial residual gas leakage may occur. Cover 11 typically has approximately the proportions 3:4 and cannot be regarded as entirely stiff, unless the cover is very heavy and correspondingly expensive. Therefore, the pressure on the sealing strip 13 at midpoint, PL, of long cover edge 19 will be considerably higher than the pressure on the sealing strip 13 at midpoint, PS, along the shorter cover edge 21 of cover 11. This effect is increased if cover 11 has reinforcement ribs 23 that run parallel with the shorter cover edges 21, as illustrated in fig 4. Due to the noted shortcomings of prior art covers and sealing arrangements, improved sealing arrangements/covers are needed.

Fig 5 and 6 illustrate a cross section through a sealing arrangement 25 according to the present disclosure in a closed and in an opened position, respectively. This sealing arrangement 25 includes a compression limiting device 26 in the form of a flange, that extends upwardly from opening edge 9b away from top wall 8 to form free edge 26a. Flange 26 projects from opening edge 9b around opening 9. Free edge 26a of flange 26 abuts or interacts with cover 11 when in its closed position, covering opening 9. A distance, D, that may be about 25 mm, away from flange 26 there is optionally a flange 29. Flange 29 is attached to top wall 8 and extends upwardly away from top wall 8 to form free edge 29a. Distance D may be adjusted depending on the sealing capacity requirements of sealing arrangement 25. A flexible sealing strip 27 having a height greater than that of flange 26 is provided. Typically, the uncompressed height of the sealing strip 27 may be about 40 mm and the height of the flange 26 may be about 30mm. Due to the height and flexibility of sealing strip 27, sealing strip 27 is compressed or deformed by cover 11 when in its closed position to provide a gastight sealing function. However, when the sealing strip 27 becomes compressed to a certain extent, in the example 10 mm, cover 11 contacts compression limiting device 26, thus preventing further compression of sealing strip 27. By preventing further compression of sealing strip 27, sealing strip 27 remains uniformly compressed along the entire periphery of opening 9. Only a portion of the load of cover 11 is supported by sealing strip 27, which may thus be specifically designed for sealing functionality rather than with load carrying abilities in mind.

As illustrated in fig 6, sealing strip 27 may be hollow, or as an alternative, filled such as for example with foam, and have a cross section suitable for a snug fit between flanges 26 and 29 with an arc-shaped exposed top portion 27a. As an alternative, sealing strip 27 may be a profile constructed with a "U" cross section, wherein the sides of the U snugly fit between flanges 26 and 29 and the curved base serving as exposed top portion 27a. This profile is considered hollow as it defines an inner volume that can e.g. be filled with foam. The second flange may be about 25 mm.

Exposed top portion 27a of the sealing strip 27 is arc-shaped and constructed to ensure that continuous, substantially gastight contact exists between sealing strip 27 and cover 11 when cover 11 is fitted over opening 9, even if the cover 11 is not precisely parallel with the top wall 8 at the location of contact with the sealing strip 27. This may be advantageous as cover 11 may be slightly inclined at one or more portions of the cover periphery, as illustrated by the dashed line in fig 6. The non-flexed shape of the cover 11 in fig 5 can thus be considered somewhat ideal. Still continuous, substantially gastight contact between sealing strip 27 and cover 11 can be maintained.

Many sealing strip designs are possible in meeting the sealing and support requirements necessary. First of all, a number of various cross sectional shapes could be considered such as for example square, rectangular, circular, and the like. Secondly, a solid sealing strip, a hollow sealing strip or a hollow, filled sealing strip could be used.

Yet another suitable option is a foam filled tube or like profile. Such a tube or profile can be relatively soft and yet have a durable outer surface. At the same time, should this durable surface be punctured, the inner, soft foam still prevents leakage through sealing strip 27.

A Fluoroelastomer such as Viton® (DuPont Performance Elastomers L.L.C., Wilmington Delaware, USA) is one material considered for the sealing strip, whether or not filled with foam.

In the case illustrated in fig. 5 and fig. 6, the compression limiting device 26 includes a flange extending perpendicularly from the cover-overlapping area 15 around the opening 9. Flange 26 extends upwardly away from the cover overlapping area 15 less than sealing strip 27. As soon as sealing strip 27 is compressed to a certain degree by cover 11, compression limiting device 26 supports the remaining cover 11 load. Thus, the sealing strip 27 supports only a portion, usually a small fraction, of the load from cover 11.

The compression limiting device 26 is illustrated in fig. 5 and fig. 6 as flanges 26 and 29 surrounding opening 9. However, other embodiments are also possible. For example, each of the flanges 26 and 29 could be a single flange or a plurality of flanges without impairing function. Further, the form of the compression limiting device 26 may vary. For example, rather than one or more flanges, the compression limiting device 26 may be in the form of a plurality of cylinders or blocks of matching height extending upwardly away from top wall 8 at regular intervals around opening 11 would provide a similar function. The compression limiting device 26 need not extend perpendicularly from top wall 8 but rather may extend therefrom at an angle or angles.

In the case illustrated in fig. 5 and fig. 6, both the sealing strip 27 and the compression limiting device 26 are attached to top wall 8 around opening 9. However either, or both, could instead be attached to cover 11 at the corresponding opposed position.

In illustrated in fig. 5 and fig. 6, sealing arrangement 25 includes a second flange 29, parallel to first flange 26, such that a channel is formed therebetween, wherein the sealing strip 27 is placed. The second flange 29 need not function as a compression limiting device even if this is also an option. The second flange 29 may singularly serve to prevent sealing strip 27 from expanding outwardly away from first flange 26, such that sealing strip 27 supports less of the load from cover 11. The sealing strip may, in its compressed state, substantially fill the channel formed between the first and second flanges 26, 29.

A locking device, e.g. similar to the one illustrated in fig 3 could be provided.

Fig 7 illustrates an improved cover. As illustrated, the cover 11' has reinforcement ribs 31 and 33 positioned or formed in directions parallel with the long and short edges of cover 11'. More generally, a cover 11', which need not be rectangular, may have stiffness improving means positioned or formed in more than one direction, such that the flexural rigidity of cover 11' is substantially the same, regardless of the axis across which cover 11' is flexed. This may be achieved by varying spacing or dimensions of the reinforcement ribs, or the like.

Thanks to the uniform flexural rigidity of cover 11', cover 11' distributes a more uniform pressure on sealing arrangement 27, thereby reducing the performance characteristics required from sealing arrangement 27.

The invention is not limited to the disclosed embodiments and may be altered in different ways within the scope of the appended claims. The specified measures mentioned above are of course examples that can be varied in accordance with a specific application.

## Claims

1. A sealing arrangement for a cover (11), covering an opening (9), the sealing arrangement comprising at least one deformable sealing strip (27) disposed between said cover and a cover overlapping area (15), which surrounds said opening, **characterized by** a compression limiting device (26) attached to the cover overlapping areas or the cover, which limits the compression of the deformable sealing strip such that the sealing strip is compressed but carries only a portion of the cover load when the opening is covered by the cover.

2. A sealing arrangement according to claim 1, wherein the deformable sealing strip is a hollow tube or profile.

3. A sealing arrangement according to claim 2, wherein the hollow tube or profile is filled with a foam material.

4. A sealing arrangement according to any of the preceding claims, wherein the sealing strip is attached to the cover overlapping areas and the compression limiting device includes a first flange (26), extending from the cover overlapping area, and having a height that is smaller than the height of the sealing strip in the latter's uncompressed state.

5. A sealing arrangement according to claim 4, wherein the sealing arrangement includes a second flange (29), extending from the cover overlapping area, and having a height that is smaller than the height of the first flange, wherein a channel is formed between the first and second flanges, and wherein the sealing strip, in its compressed state, substantially fills the channel.

6. A sealing arrangement according to any of the preceding claims, wherein the opening (9) is an entry into a plenary space of a textile filter unit (1), which plenary space has a pressure below atmospheric pressure when the textile filter unit is operating.

7. A sealing arrangement according to any of the preceding claims wherein the cover (11') has stiffness increasing means (31, 33) extending in more than one direction, such that the flexural rigidity of the cover is substantially the same, regardless of the axis across which the cover is flexed.

8. A sealing arrangement according to any of the preceding claims, wherein the sealing strip is attached to the cover overlapping areas and comprises a rounded uppermost portion.
